# EUROPEAN PATENT SPECIFICATION

(11) **EP 4 001 729 B1**
(45) Date of publication and mention of the grant of the patent: **17.04.2024**
(21) Application number: 20844917.3
(22) Date of filing: 09.07.2020
(51) Int. Cl.: F27D 1/00, F27D 1/14, F27D 3/02, C21D 1/00

(54) **HEAT INSULATING PROTECTIVE MEMBER AND INSTALLING THE SAME**
WÄRMEISOLIERENDES SCHUTZELEMENT UND DESSEN MONTAGE
ÉLÉMENT DE PROTECTION D'ISOLATION THERMIQUE ET D'INSTALLATION DE CELUI-CI

(30) Priority: 19.07.2019 JP 2019133919
(43) Date of publication of application: 25.05.2022
(73) Proprietor: MAFTEC Co., Ltd., Tokyo 100-0004 (JP)
(72) Inventor: YANO, Akihiro, Tokyo 100-8251 (JP); KOBAYASHI, Tomoyuki, Tokyo 100-8251 (JP); SUZUKI, Mitsuo, Tokyo 100-8251 (JP)
(74) Representative: Hoffmann Eitle
(86) International application number: PCT/JP2020/026892
(87) International publication number: WO 2021/014989

(56) References cited:
- EP-A1- 3 220 086
- EP-A2- 3 372 897
- WO-A1-2017/195606
- WO-A1-2017/195606
- CN-A- 107 830 311
- JP-A- H0 259 411
- JP-A- S5 443 361
- JP-A- S5 554 793
- JP-A- S6 458 987
- JP-A- H02 258 245
- JP-A- S63 129 080
- JP-A- 2005 171 466
- JP-A- 2009 019 762
- JP-A- 2016 079 776

## Description

### Technical Field

The present invention relates to a heat insulating protective member that is installed on a skid pipe or the like in a reheating furnace and a method for installing the same.

### Background Art

Inorganic fiber aggregates and inorganic fiber formed bodies that have high thermal shock properties have been used as protective members for skid pipes in reheating furnaces in the iron and steel industry (PTL 1 to 3).

PTL 1 discloses a skid pipe covered with a ring-shaped heat insulating material composed of ceramic fiber and produced by stamping.

### Citation List

### Patent Literature

PTL 1: JP 2004-43918 A
PTL 2: WO 2016/076258 A1
PTL 3: WO 2017/195606 A1

Further related art may be found in WO 2017195606A1 which describes a skid pipe and method for constructing heat-insulating protective member therefore, in EP 3220086A1 which describes a heat-insulating protective member for skid post, and method for applying head-insulating protective member for skid post and in EP 3372897A2 which describes a burner tile, burner, and furnace.

### Summary of Invention

### Technical Problem

Stamping, however, is not economically feasible, and the heat insulating material according to PTL 1 is impractical. In addition, ring-shaped heat insulating materials composed of inorganic fibers in the related art have insufficient physical strength and may become brittle due to scale corrosion in a furnace, abrupt temperature changes in accordance with temperature increase and decrease, and the like. Consequently, when people frequently move around in the furnace for periodic maintenance or the like, the heat insulating material may be damaged due to contact. It is an object of the present invention to provide a heat insulating protective member that has cushioning properties, that is composed of an inorganic fiber formed body having excellent workability, and that has excellent physical strength, a method for manufacturing and a method for installing the heat insulating protective member, an in-furnace member, and a reheating furnace.

### Solution to Problem

In the present invention, regarding a hollow cylindrical heat insulating protective member used in a high-temperature environment such as in a furnace, an improvement in outer-circumferential-surface-side stiffness without impairing inner-circumferential-surface-side cushioning properties has attracted great amounts of attention, and a heat insulating protective member not susceptible to damage due to contact is proposed.

The scope of the present invention is defined by independent claims 1 and 9, and further embodiments of the invention are specified in dependent claims 2-8 and 10-12. The method for manufacturing the heat insulating protective member as described herein is not claimed (does not fall within the scope of the present invention) and for technical illustration.

### Advantageous Effects of Invention

The heat insulating protective member according to the present invention is impregnated with the inorganic binder. Since the inorganic binder content increases toward the outer circumferential surface from the inner circumferential surface, the bulk density increases toward the outer circumferential surface. Consequently, the inorganic binder enhances the integration performance of the heat insulating protective member, and the stiffness of the outer circumferential surface is improved without impairing the cushioning properties of the inner circumferential surface.

In addition, the heat insulating protective member according to the present invention is an inorganic fiber formed and fired body, there are more inorganic binder particles that are firing products of the inorganic binder on the outer circumferential surface than on the inner circumferential surface, and the bulk density increases toward the outer circumferential surface. Consequently, the inorganic binder particles enhance the integration performance of the heat insulating protective member, and the stiffness of the outer circumferential surface is improved without impairing the cushioning properties of the inner circumferential surface.

### Brief Description of Drawings

[Fig. 1] Fig. 1 is a perspective view illustrating a method for manufacturing a heat insulating protective member according to an embodiment.
[Fig. 2] Fig. 2 is a sectional view illustrating a method for manufacturing a heat insulating protective member according to an embodiment.
[Fig. 3] Fig. 3 is a sectional view illustrating a method for manufacturing a heat insulating protective member according to an embodiment.
[Fig. 4] Fig. 4 is a sectional view illustrating a method for manufacturing a heat insulating protective member according to an embodiment.
[Fig. 5] Fig. 5 is a sectional view illustrating a method for manufacturing a heat insulating protective member according to an embodiment.
[Fig. 6] Fig. 6 is a sectional view illustrating a method for manufacturing a heat insulating protective member according to an embodiment.
[Fig. 7] Fig. 7 is a perspective view illustrating an example of a heat insulating protective member according to an embodiment.
[Fig. 8] Fig. 8 is a perspective view illustrating an example of a heat insulating protective member according to an embodiment.
[Fig. 9] Fig. 9 is a perspective view illustrating an example of an in-furnace member.
[Fig. 10] Fig. 10 is a perspective view illustrating a method for installing a heat insulating protective member according to an embodiment.
[Fig. 11] Fig. 11 is a perspective view illustrating a method for installing a heat insulating protective member according to an embodiment.
[Fig. 12] Fig. 12a is a perspective view illustrating a method for installing a heat insulating protective member according to an embodiment, and Fig. 12b is a sectional view of the section taken along line XIIb-XIIb in Fig. 12a. Description of Embodiments

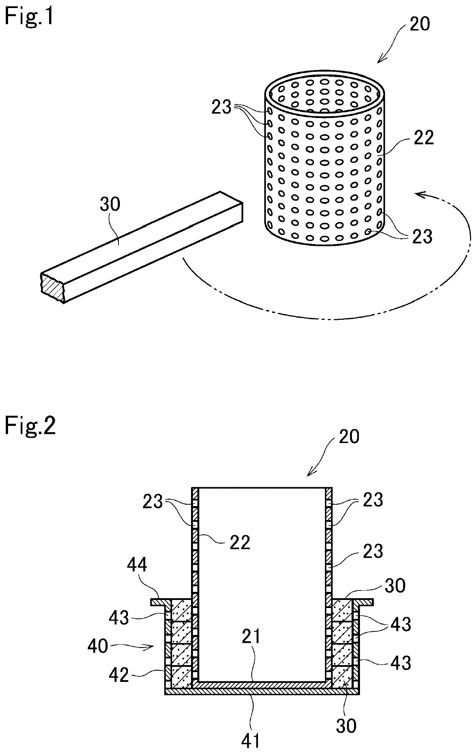

The embodiment will be described below with reference to Fig. 1 to Fig. 12b. In this regard, in the following description, a heat insulating protective member is attached to a skid pipe but may also be attached to other in-furnace members such as a skid beam.

Expression "a to b", which expresses a numerical range, denotes "a or more and b or less" and includes the sense of "preferably more than a" and "preferably less than b", unless otherwise specified.

In addition, regarding the upper limit value and the lower limit value of the numerical range in the present specification, values that are slightly beyond the numerical range specified in the present invention are included in the equivalent scope of the present invention provided that the operations and advantages are akin to those when the values are within the numerical range.

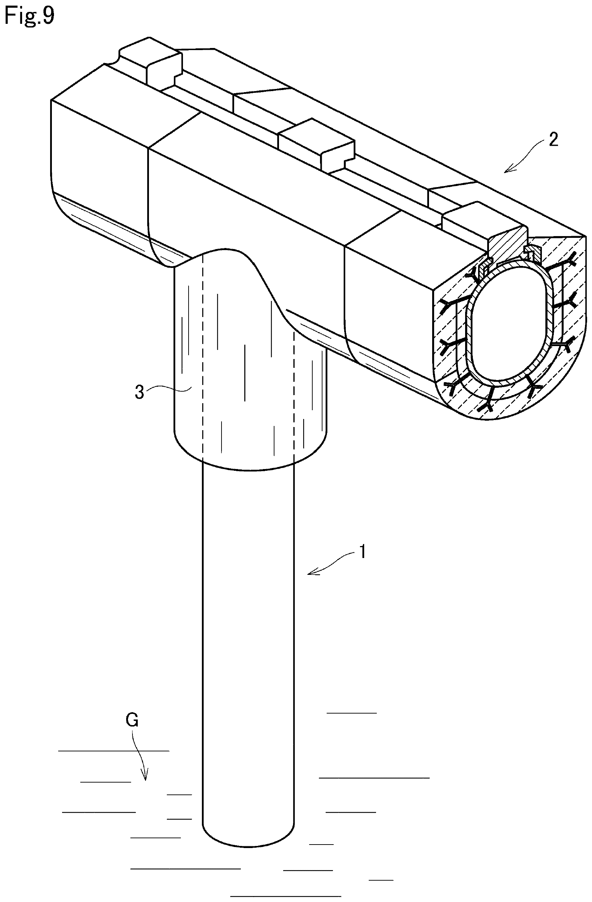

As illustrated in Fig. 9, a skid pipe 1 on which a heat insulating protective member is installed is in the shape of a pipe composed of heat-resistant steel and is erected on a hearth G of a heat treatment furnace. A skid beam 2 is disposed so as to be supported by a plurality of skid pipes 1. A fireproof covering 3 composed of castable refractory is attached to the upper portion of the skid pipe 1. In the present invention, the heat insulating protective member is installed on the portion under the fireproof covering 3 of the skid pipe 1.

The skid pipe 1 is provided with a plurality of anchors (not illustrated in the drawings) at predetermined intervals in the height direction.

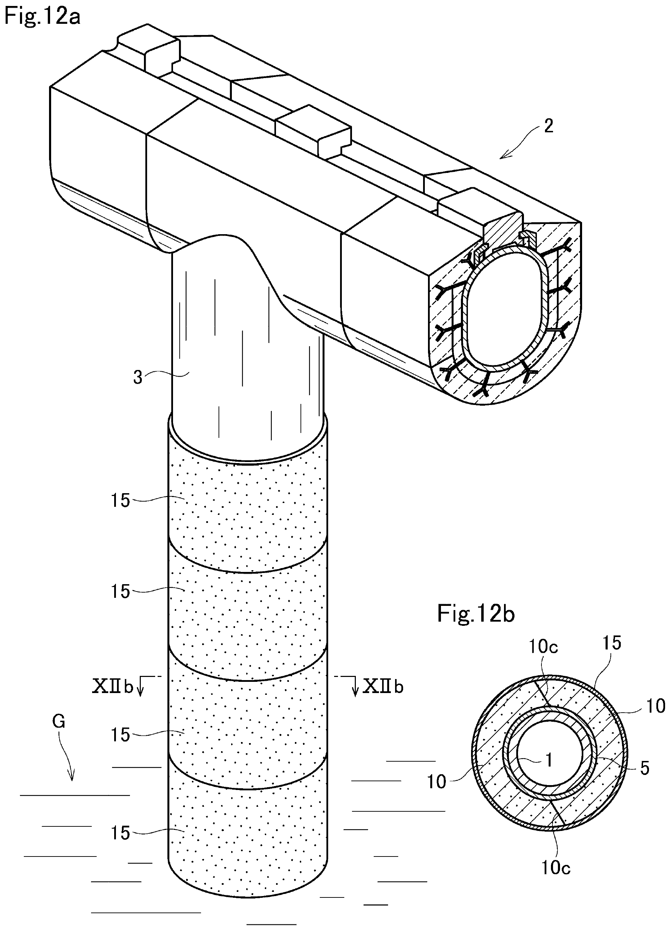

The cross section of the skid pipe 1 is not limited to being in the shape of a perfect circle. Therefore, it is preferable that the outer circumferential surface of the skid pipe 1 be covered with an underlying layer 5 (refer to Fig. 12b) before the heat insulating protective member is installed. Consequently, adhesiveness between the outer circumferential surface and a heat insulating protective member 10 is enhanced, and a higher heat insulating effect can be realized. The underlying layer 5 is composed of inorganic fiber, castable refractory, or the like.

In the present invention, a plurality of heat insulating protective members 10 composed of inorganic fiber (in the present embodiment, alumina/silica-based fiber) needled blankets are attached to the skid pipe 1 in steps in the vertical direction.

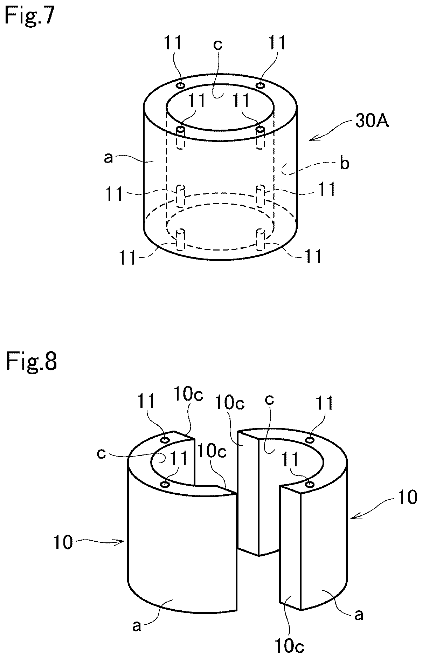

As illustrated in Fig. 8, the heat insulating protective member 10 has a substantially half-split hollow cylindrical shape, and a pair of heat insulating protective members 10 are attached so as to be contacted one another with the skid pipe 1 interposed therebetween.

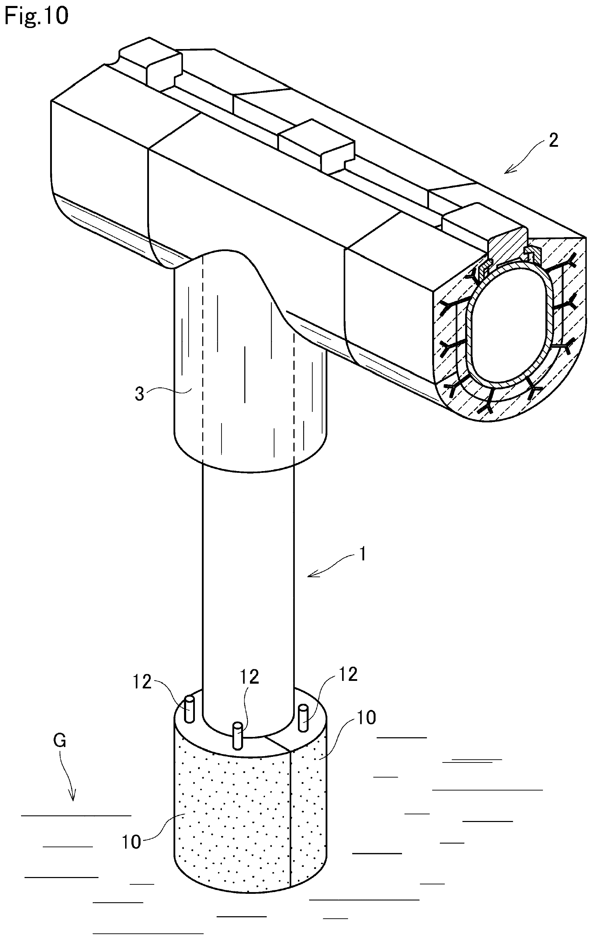

As illustrated in Fig. 10, after a pair of the heat insulating protective members 10 are attached to the lowermost portion of the skid pipe 1, a refractory (in the present embodiment, alumina) pin 12 is inserted into a hole 11 of the upper end surface of the heat insulating protective member 10 so as to stand erect.

Subsequently, a pair of heat insulating protective members 10 at a second step from the bottom are attached to the skid pipe 1. At this time, the pin 12 protruding from the heat insulating protective member 10 at the first step is inserted into a hole 11 of the lower end surface of the heat insulating protective member 10 at the second step. In addition, a pin 12 is inserted into a hole 11 of the upper end surface of the heat insulating protective member 10 at the second step so as to stand erect.

After the heat insulating protective members 10 at the second step are installed, heat insulating protective members 10 at the third and subsequent steps are installed to the skid pipe 1 in the same manner.

To avoid a gap between the butting surfaces of the heat insulating protective members 10 contacted one another with the skid pipe 1 interposed therebetween from being contiguous with a gap of vertically adjacent heat insulating protective members 10, it is preferable that directions of the heat insulating protective members 10 of the adjacent steps be differentiated from each other.

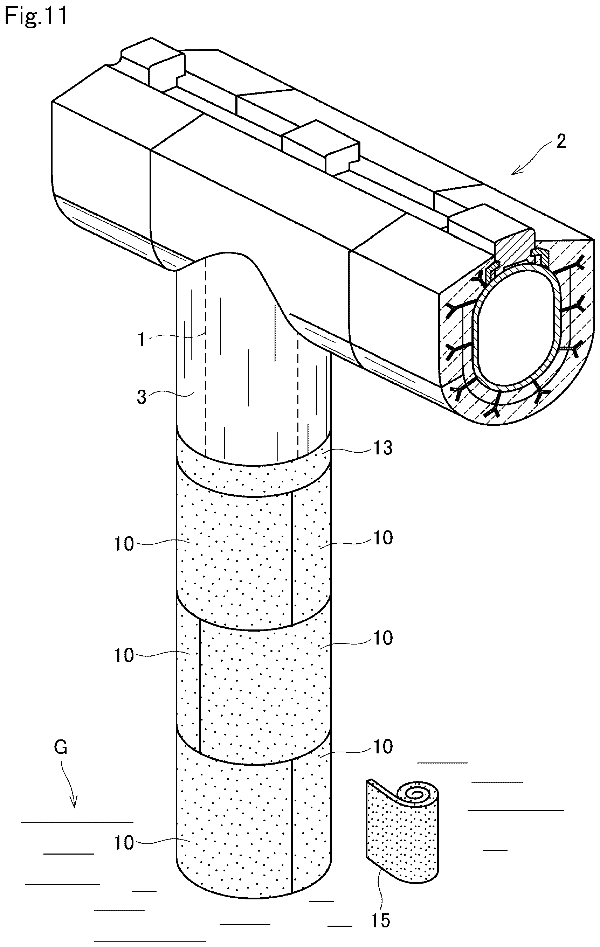

As illustrated in Fig. 11, after the heat insulating protective members 10 at the uppermost step (in Fig. 11, the third step) are attached to the skid pipe 1, a filler 13 composed of an inorganic fiber (in the present embodiment, alumina/silica-based fiber) needled blanket is pushed between the upper end surface of the heat insulating protective members 10 at the uppermost step and the fireproof covering 3.

A paste-like heat-resistant adhesive composition may be attached to the respective butting surfaces of the heat insulating protective members 10 or the inner circumferential surface of the heat insulating protective member 10. A material produced by kneading a pulverized product of the inorganic fiber and fire clay such as kaolinite with water is suitable for the heat-resistant adhesive composition.

As illustrated in Figs. 12a and 12b, after the filler 13 is filled as described above, a blanket 15 that is impregnated with the inorganic binder and that is in an undried state is wound around the outer circumferential surface of each heat insulating protective member 10 so as to complete installation. The blanket 15 that is impregnated with the inorganic binder and that is in an undried state is dried and fired through a temperature-increasing and heating step after the start of operation of the reheating furnace so as to become a blanket containing an oxide-based heat-resistant composition.

The blanket 15 being wound enables hot air to be effectively suppressed from entering the heat insulating protective member attached to the skid pipe 1.

Next, a method for manufacturing the heat insulating protective member 10 will be described with reference to Figs. 1 to 8.

As illustrated in Figs. 1 and 2, a hollow cylindrical inner mold 20 with a bottom having a bottom surface portion 21 and a side circumferential portion 22 is prepared. The side circumferential portion 22 is provided with multiple holes 23 that pass through from the inner circumferential surface to the outer circumferential surface. The bottom surface portion 21 is provided with no holes.

After a release sheet (not illustrated in the drawings) composed of a glass fiber sheet or the like is wound around the outer circumferential surface of the inner mold 20, stacked inorganic fiber (in the present embodiment, alumina fiber) needled blankets 30 are filled between the inner mold and the outer mold. There is no particular limitation regarding the size and the shape of the needled blanket, and it is preferable that the blanket is cut in accordance with the size of the heat insulating protective member (the distance from the inner circumferential surface to the outer circumferential surface and the circumferential length of the inner circumferential surface). For example, preferably, an inorganic fiber needled blanket is cut to have a length equal to the circumferential length of the inner mold 20 is used. In addition, preferably, the inorganic fiber needled blanket is cut to have a width equivalent to the distance from the inner circumferential surface to the outer circumferential surface in the cross-sectional form of the hollow cylinder of a target heat insulating protective member.

In an embodiment, as illustrated in Fig. 2, a first outer mold 40 surrounding the inner mold 20 is disposed, and the needled blanket 30 is filled between the side circumferential portion 42 of the outer mold 40 and the side circumferential portion 22 of the inner mold 20 to by being pushed therebetween the needled blanket 30.

The outer mold 40 is in the shape of a hollow cylinder with a bottom having a bottom surface portion 41 and a side circumferential portion 42. The inner mold 20 is coaxially disposed in the outer mold 40 so that the bottom surface portion 41 is stacked on the bottom surface portion 21. The side circumferential portion 42 is provided with multiple through holes 43. A flange portion 44 is disposed at the upper end of the side circumferential portion 42.

It is preferable that the height of the outer mold 40 be less than the height of the inner mold 20. In the present embodiment, the height of the outer mold 40 is about half the height of the inner mold 20. After a plurality of needled blankets 30 are filled between the inner mold and the outer mold up to the upper end vicinity of the outer mold 40, a second outer mold 50 is disposed on the top of the outer mold 40. The second outer mold 50 is in the shape of a hollow cylinder and has the same diameter as the outer mold 40. The outer mold 50 is also provided with multiple holes 53. The outer mold 50 is provided with flanges 54 and 55 at the lower end and the upper end, respectively.

The outer mold 40 and the outer mold 50 are integrated by stacking the flange 44 and the flange 54 and coupling them with bolts.

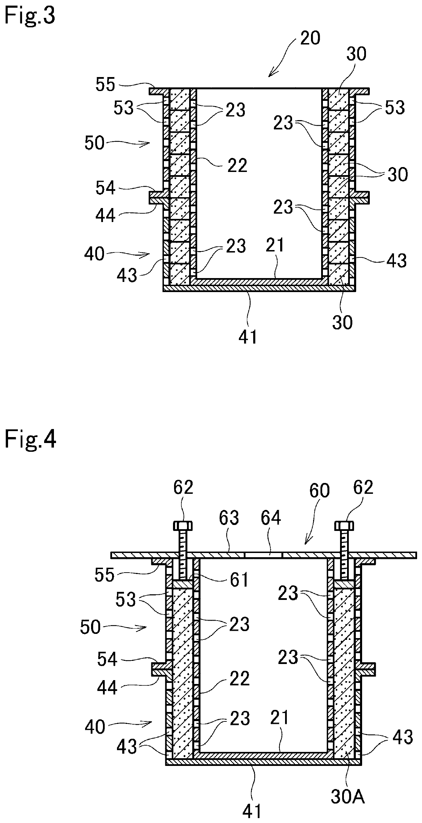

As illustrated in Fig. 3, regarding the second outer mold 50 and the inner mold 20, the needled blankets 30 are filled between the inner mold 20 and the outer mold 50 in the same manner as above. The needled blankets 30 are filled up to the uppermost portion as illustrated in Fig. 3, and thereafter, as illustrated in Fig. 4, a ring plate 61 of a pushdown jig 60 is pushed between the inner mold 20 and the second outer mold 50 to compress the needled blankets 30 between the inner mold 20 and the outer molds 40 and 50 so that a hollow cylindrical formed body 30A in which the needled blankets 30 are integrated in series is produced. In this regard, the compression may be performed by tightening bolts 62 described below.

The jig 60 includes the ring plate 61 and a lid plate 63. The lid plate 63 has an opening 64 in the central portion. The lid plate 63 and the upper flange 55 of the second outer mold 50 are coupled by bolts (not illustrated in the drawing) or the like, and the ring plate 61 is pushed by the bolts 62 so as to maintain the compression state of the hollow cylindrical formed body 30A.

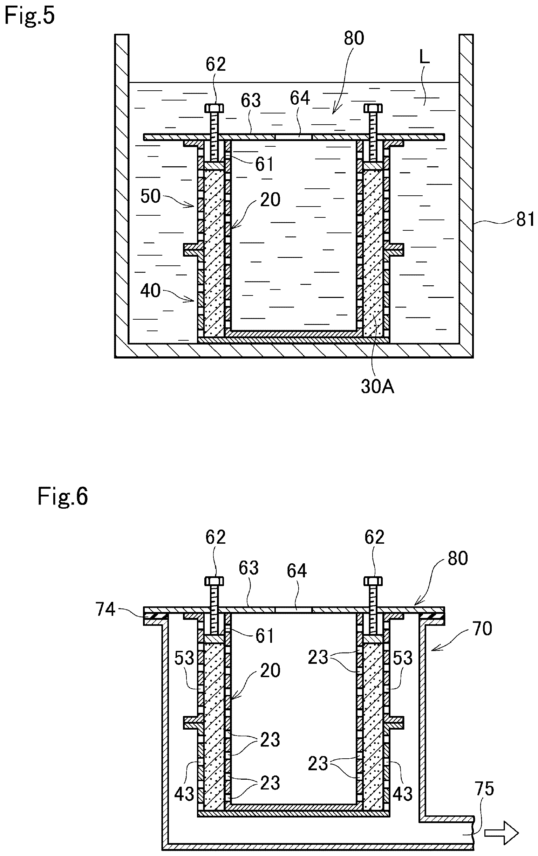

Thereafter, as illustrated in Fig. 5, the entire structure of an integrated material 80 of the inner mold 20, the hollow cylindrical formed body 30A, the outer molds 40 and 50, and the jig 60 is dipped in an inorganic-binder-containing liquid L in a tank 81 so as to sufficiently impregnate the hollow cylindrical formed body 30A with the inorganic-binder-containing liquid.

Subsequently, the integrated material 80 is taken up from the inorganic-binder-containing liquid L and is arranged in a suction dehydration case 70, as illustrated in Fig. 6. The peripheral edge portion of the lid plate 63 is placed on the flange of the upper end of the case 70 with a packing 74 interposed therebetween.

Contents in the case 70 are suctioned through a suction port 75 in the lower portion of the case 70. Consequently, the inorganic-binder-containing liquid L remaining in the inner mold 20 is suctioned through the holes 23 of the inner mold 20, the hollow cylindrical formed body 30A, and the holes 43 and 53 of the outer molds 40 and 50, respectively, to the outside of the outer molds 40 and 50 and discharged through the suction port 75. At this time, air flows into the inner mold 20 through the opening 64.

After suction is performed for a predetermined time, the opening 64 is connected to a warm air source (not illustrated in the drawing) and suction is continued. Consequently, the warm air passes through the hollow cylindrical formed body 30A, and the hollow cylindrical formed body 30A is dried.

After the hollow cylindrical formed body 30A is dried, the integrated material 80 of the inner mold 20, the hollow cylindrical formed body 30A, the outer molds 40 and 50, and the jig 60 are removed from the case 70, and the jig 60 and the outer molds 40 and 50 are removed. Subsequently, the inner mold 20 is removed from the hollow cylindrical formed body 30A so as to obtain the hollow cylindrical formed body 30A illustrated in Fig. 7.

Holes 11 are bored into the upper end surface and the lower end surface of the hollow cylindrical formed body 30A. There is no particular limitation regarding the boring method, and, for example, it is preferable to use a cork borer from the viewpoint of dimensional accuracy.

Thereafter, as illustrated in Fig. 8, the hollow cylindrical formed body 30A is cut in the direction parallel to the cylinder shaft center line so as to form a half-split hollow cylindrical heat insulating protective member 10. The cut surface 10c obliquely crosses the diameter direction of the hollow cylindrical formed body 30A.

In general, the thus produced heat insulating protective member 10 is shipped in an assembled form and is installed to an in-furnace structure such as a skid pipe.

In this regard, the heat insulating protective member produced as described above is further fired and maybe left to stand to cool, and shipped as a heat insulating protective member product.

In the state in which a pair of the heat insulating protective members 10 are combined to have a hollow cylindrical shape, preferably, the length of the cylinder in the shaft line direction is 100 to 600 mm and in particular 150 to 400 mm, and the thickness is 20 to 100 mm and in particular 30 to 80 mm.

According to the method for manufacturing the heat insulating protective member 10, as illustrated in Figs. 5 and 6, the entire heat insulating protective member 10 is impregnated with the inorganic binder. The entire heat insulating protective member being impregnated with the inorganic binder, as described above, enables the resulting inorganic fiber formed body to have the integration performance of the heat insulating protective member, that is, to have high resistance to delamination. Since the inorganic-binder-containing liquid is suctioned in the direction from the inner mold 20 toward the outer molds 40 and 50, as illustrated in Fig. 6, the inorganic binder content in the hollow cylindrical formed body 30A illustrated in Fig. 7 increases toward the outer circumferential surface. When the heat insulating protective member 10 is fired, the inorganic binder forms inorganic binder particles so as to have a function of bonding fibers to each other. Consequently, the amount of inorganic binder particles attached in the heat insulating protective member 10 after firing increases with increased inorganic binder content, and the stiffness, that is, physical strength, of the outer circumferential surface of the heat insulating protective member 10 is enhanced.

However, the weight of the heat insulating protective member 10 increases with increased inorganic binder content. In the present embodiment, since the outer-circumferential-surface-side inorganic binder content in the heat insulating protective member 10 is high, the outer-circumferential-surface-side strength and stiffness of the heat insulating protective member 10 are high. On the other hand, in the inner-circumferential-surface side of the heat insulating protective member 10, since the inorganic binder content is low, the bulk density of the heat insulating protective member 10 is reduced.

### [Material for forming heat insulating protective member 10 or the like]

There is no particular limitation regarding the needled blanket 30 for producing the heat insulating protective member 10 provided that the needled blanket 30 is an inorganic fiber blanket, and an inorganic fiber needled blanket described later is preferable.

Preferably, the needled blanket is produced by subjecting an inorganic fiber aggregate substantially not including fibers having a fiber diameter of 3 µm or less to needling treatment. Use of such a needled blanket enables enhanced wind-erosion resistance of the skid-pipe heat insulating protective member according to the present invention.

### [Inorganic fiber]

There is no particular limitation regarding the inorganic fiber constituting the needled blanket, and examples include simple or composite fibers of silica and alumina/silica and simple or composite fibers of zirconia, spinel, titania, calcia, or the like containing these. Alumina/silica-based fibers, in particular, crystalline alumina/silica-based fibers, are particularly preferable from the viewpoint of heat resistance, fiber strength (toughness), and safety.

The composition ratio (mass ratio) of alumina/silica of the alumina/silica-based fiber is preferably within the range of 65/35 to 98/2, which is known as a mullite composition or a high alumina composition, further preferably within the range of 70/30 to 95/5, and particularly preferably within the range of 70/30 to 74/26.

In the present invention, 80% by mass or more of, preferably 90% by mass or more of, and particularly preferably all of the inorganic fiber is crystalline alumina/silica-based fiber having the above-described mullite composition. In this regard, the molar ratio of Ca to Al (Ca/Al) in the inorganic fiber is preferably 0.03 or less, and, in particular, it is preferable that the inorganic fiber not contain Ca.

Preferably, the inorganic fiber substantially does not include fibers having a fiber diameter of 3 µm or less. Herein, "substantially does not include fibers having a fiber diameter of 3 µm or less" denotes fibers having a fiber diameter of 3 µm or less being 0.1% by mass or less of the total fiber weight.

The average fiber diameter of the inorganic fiber is preferably 5 to 7 µm. If the average fiber diameter of the inorganic fiber is excessively large, repulsion and toughness of the fiber aggregate are lost, and if the average fiber diameter is excessively small, the amount of dust generated and floated in air increases and there is a high probability of fibers having a fiber diameter of 3 µm or less being included.

### <Method for manufacturing needled blanket>

The inorganic fiber aggregate having the above-described favorable average fiber diameter and substantially not including fibers having a fiber diameter of 3 µm or less may be obtained through control of the spinning liquid viscosity, control of air flow used for a spinning nozzle, control of drying of stretched yarn, control of needling, and the like in production of the inorganic fiber aggregate by using a sol-gel method.

The needled blanket is produced through a step of obtaining an aggregate of an inorganic fiber precursor by using a sol-gel method, a step of subjecting the resulting inorganic fiber precursor to needling treatment, and a firing step of firing the aggregate of the inorganic fiber precursor subjected to needling treatment so as to produce an inorganic fiber aggregate, as described in a known method in the related art, for example, JP 2014-5173 A.

### <Needle mark density, bulk density, and thickness of needled blanket>

Preferably, the needle mark density of the needled blanket is 2/cm² to 200/cm², particularly 2/cm² to 150/cm², especially 2/cm² to 100/cm², and most preferably 2/cm² to 50/cm². If the needle mark density is excessively low, there are problems of a reduction in the uniformity of the thickness of the needled blanket, a reduction in the thermal shock resistance, and the like. If the needle mark density is excessively high, there is a concern that fiber may be impaired so as to be readily scattered after firing.

The bulk density of the needled blanket is preferably 50 to 200 kg/m³ (0.05 to 0.2 g/cm³) and more preferably 80 to 150 kg/m³ (0.08 to 0.15 g/cm³). If the bulk density is excessively low, a brittle inorganic fiber formed body is produced, and if the bulk density is excessively high, the mass of the inorganic fiber formed body increases and the repulsion is lost, resulting in a formed body having low toughness being produced.

Preferably, the area density of the needled blanket is 500 to 4,000 g/m², particularly 600 to 3,800 g/m², and especially 1,000 to 3,500 g/m². If the area density is excessively low, the amount of the fiber is small, and only a very thin formed body is obtained, resulting in the usefulness of the heat insulating inorganic fiber formed body being reduced, and if the area density is excessively high, since the amount of the fiber is excessively large, control of the thickness through needling treatment is difficult.

The thickness (thickness in the vertical direction in Fig. 1) of the needled blanket 30 composed of a needled blanket is preferably 3 to 30 mm and, in particular, 5 to 15 mm, and the width is preferably 20 to 100 mm and, in particular, about 30 to 80 mm.

### [Inorganic binder]

There is no particular limitation regarding the inorganic binder with which the above-described needled blanket is impregnated, and a material that forms an oxide through firing such as inorganic sols and metal salts or mixtures thereof may be adopted. Specific examples will be described below, although the present invention is not limited to such.

Examples of the inorganic sol include alumina sol, zirconia sol, titania sol, magnesia sol, and calcia sol. Examples of the metal salt include organic acid salts of the above-described metal species, the organic acid being formic acid, acetic acid, citric acid, oxalic acid, benzoic acid, malic acid, or the like, and mineral acid salts of the metal species, the mineral acid being nitric acid or the like. Of these, alumina sol is preferable from the viewpoint of its value of thermal expansion coefficient being close to that of the inorganic fiber aggregate. A plurality of inorganic sols may be used as the inorganic binder.

Regarding the concentration of the inorganic-binder-containing liquid, the solids content is preferably 6 to 14% by weight and, in particular, 8 to 11% by weight. In addition, the viscosity of the inorganic-binder-containing liquid is adjusted to preferably 5 to 200 cP.

### [Configuration of heat insulating protective member 10]

The heat insulating protective member according to the present invention is composed of the inorganic fiber formed body having the inner circumferential surface (c) delimiting the hollow and the outer circumferential surface (a) constituting the outer circumference, and the bulk density increases toward the outer circumferential surface (a). In this regard, the method for measuring the bulk density will be described.

That is, in the cross section connecting the inner circumferential surface (c) to the outer circumferential surface (a), an inner-circumferential-surface-(c)-side 1/3 region is denoted as an inner circumferential region, an outer-circumferential-surface-(a)-side 1/3 region is denoted as an outer circumferential region, and a 1/3 region between the inner region and the outer region is denoted as an intermediate region. In addition, the midpoint between the outer circumferential surface (a) of the inorganic fiber formed body and the inner circumferential surface (c) is denoted as a midpoint portion (b). In the present invention, the measurement position of the bulk density (C), the amount (B) of the inorganic binder attached, or the like of each region is as described below. For example, a cross section of the entire inorganic fiber formed body constituting the heat insulating protective member or a cross section of an inorganic fiber formed body that has any size and that is cut so as to have the cross section in the direction perpendicular to the shaft center of the hollow in the heat insulating protective member is divided into 3 parts which are denoted as an outer circumferential region, an intermediate region, and an inner circumferential region. Regarding the bulk density (Dc) of the inner circumferential surface, the bulk density of the inner circumferential region (for example, a region within 12 mm from the inner circumferential surface) is measured. Regarding the bulk density (Da) of the outer circumferential surface, the bulk density of the outer circumferential region (for example, a region within 12 mm from the outer circumferential surface) is measured. Regarding the bulk density (Db) of the midpoint portion, the bulk density in the intermediate region is measured.

In this regard, in the present invention, "the bulk density increases toward the outer circumferential surface (a)" denotes that the outer-circumferential-surface-(a)-side has a higher bulk density than the inner-circumferential-surface-(c)-side, and it is not necessary that the bulk density continuously increases from the inside toward the outside. Herein, "inner-circumferential-surface side" denotes a portion relatively closer to the inner circumferential surface (c) than the outer circumferential surface (a), and the "outer-circumferential-surface side" denotes a portion relatively closer to the outer circumferential surface (a) than the inner circumferential surface (c).

Therefore, for example, the value of the bulk density may increase relatively abruptly from the inner circumferential surface (c) to the midpoint portion (b) and the bulk density may increase gradually from the midpoint portion (b) to the outer circumferential surface (a). Alternatively, the bulk density may be constant from the inner circumferential surface (c) to the midpoint portion (b), and the bulk density may increase from the midpoint portion to the outer circumferential surface (a). Alternatively, a spot-like region having a high bulk density may be present in the midpoint portion (b), and the value of the bulk density may initially decrease and thereafter increase toward the outer circumferential surface (a).

However, the bulk density of the inorganic fiber formed body constituting the heat insulating protective member according to the present invention preferably satisfies the relationship represented by Da > Db > Dc from the viewpoint of considerable improvement in the physical strength with respect to contact, and, further preferably, the bulk density increases continuously from the inner circumferential surface (c) toward the outer circumferential surface (a).

The bulk density (Dc) of the inner circumferential surface is lower than the bulk density (Da) of the outer circumferential surface and is preferably 50% by mass to 99% by mass, further preferably 60% by mass to 95% by mass, and particularly preferably about 70% by mass to 90% by mass.

The bulk density (Db) of the midpoint portion is less than or equal to the bulk density (Da) of the outer circumferential surface and is more than or equal to the bulk density (Dc) of the inner circumferential surface. The bulk density (Db) of the midpoint portion is preferably 75% by mass to 99% by mass the bulk density (Da) of the outer circumferential surface, further preferably 80% by mass to 98% by mass, and particularly preferably about 85% by mass to 97% by mass. In this regard, the bulk density (kg/m³) can be determined by dividing the weight by the volume.

In the heat insulating protective member according to the present invention, regarding the amount of the inorganic binder attached (the amount of solid matter attached), the inorganic binder content increases toward the outer circumferential surface (a). That is, the amount of the binder (Ba) contained at the outer circumferential surface, the amount of the binder (Bb) contained at the midpoint portion, and the amount of the binder (Bc) contained at the inner circumferential surface preferably satisfy the relationship represented by Ba > Bb > Bc.

The amount of the binder (Bc) attached to the inner circumferential surface is less than the amount of the binder (Ba) attached to the outer circumferential surface and is preferably 0.1% by mass to 50% by mass, further preferably 0.5% by mass to 30% by mass, and particularly preferably about 1.0% by mass to 20% by mass. The amount of the binder (Bb) attached to the midpoint portion is less than or equal to the amount of the binder (Ba) attached to the outer circumferential surface and more than or equal to the amount of the binder (Bc) attached to the inner circumferential surface. The amount of the binder (Bb) attached to the midpoint portion is preferably 10% by mass to 95% by mass the amount of the binder (Ba) attached to the outer circumferential surface, further preferably 20% by mass to 90% by mass, and particularly preferably about 30% by mass to 80% by mass.

The amount of the binder (Ba) attached to the outer circumferential region of the heat insulating protective member 10 according to the present invention is preferably 2 to 70 parts by mass and further preferably 2 to 50 parts by mass relative to 100 parts by mass of the inorganic fiber in terms of the amount of oxide (for example, Al₂O₃).

The amount of the binder (Bc) attached to the inner circumferential region of the heat insulating protective member 10 according to the present invention is preferably 0.5 to 40 parts by mass and further preferably 0.5 to 40 parts by mass relative to 100 parts by mass of the inorganic fiber in terms of the amount of oxide (for example, Al₂O₃).

The amount of the binder (Bb) attached to the intermediate region of the heat insulating protective member 10 according to the present invention is preferably 2 to 55 parts by mass and further preferably 2 to 35 parts by mass relative to 100 parts by mass of the inorganic fiber in terms of the amount of oxide (for example, Al₂O₃).

Preferably, the amount of the inorganic binder (in terms of oxide) attached to the entire heat insulating protective member is 5 to 40 parts by mass and in particular 8 to 30 parts by mass relative to 100 parts by mass of the inorganic fiber of the entire heat insulating protective member.

According to an aspect of the present invention, the heat insulating protective member is an inorganic fiber formed body including inorganic binder particles that bond the inorganic fibers to each other (the inorganic fiber formed body impregnated with the inorganic-binder-containing liquid and dried to effect attachment). In the inorganic fiber formed body, the amount of the inorganic binder particles attached increases toward the outer circumferential surface (a). There is no particular limitation regarding the inorganic binder particles, and particles having an average particle diameter of 20 to 35 nm are preferable. It is conjectured that the inorganic binder particle content in the inorganic fiber formed body being high improves the outer-circumferential-surface-side stiffness since the bondability of the inorganic fibers constituting the inorganic fiber formed body to each other is enhanced and since gaps between inorganic fibers are filled.

In an embodiment, the heat insulating protective member according to the present invention is an inorganic fiber formed and fired body produced by firing the above-described inorganic fiber formed body. In the present embodiment, the amount of inorganic binder particles which are firing products of the inorganic binder and which are present in the outer-circumferential-surface side of the inorganic fiber formed and fired body is high compared with the inner-circumferential-surface side, and the bulk density increases toward the outer circumferential surface. Consequently, the inorganic binder particles enhance the integration performance of the heat insulating protective member, and the outer-circumferential-surface-side stiffness is improved. The inorganic binder particles can be observed by using, for example, various types of microscopes.

According to the present invention, the heat insulating protective member is composed of an inorganic fiber formed and fired body, and the bulk density preferably increases toward the lower portion in the vertical direction.

According to an embodiment of the present invention, preferably, the heat insulating protective member has a single-layer configuration in any cross section that connects the inner circumferential surface (c) and the outer circumferential surface (a). Specific examples include an inorganic fiber blanket wound one turn in the direction parallel to the shaft center of the hollow and inorganic fiber blankets stacked in the direction perpendicular to the shaft center of the hollow.

It is preferable that the heat insulating protective member according to the present invention be composed of inorganic fiber blankets stacked in the direction of the shaft center of the hollow.

### [In-furnace member]

The in-furnace member according to the present invention is an in-furnace member provided with the above-described heat insulating protective member on the outer surface. There is no particular limitation regarding the in-furnace member, and a member having a curved surface, in particular, a cylindrical surface, is preferable. Examples include skid posts (skid pipes provided with the heat insulating protective member according to the present invention) and skid beams. Of these, skid posts are preferable from the viewpoint of contribution of the effect of improving the outer-circumferential-surface-side stiffness according to the present invention.

According to an embodiment of the in-furnace member of the present invention, installation is performed by winding the blanket 15 to which the inorganic binder is attached and which is in an undried state around the outer circumference of the heat insulating protective member 10. The blanket 15 to which the inorganic binder is attached and which is in an undried state is dried and fired through a temperature-increasing and heating step after the start of operation of the reheating furnace so as to become a blanket containing an oxide-based heat-resistant composition. The blanket 15 being wound favorably enables hot air to be effectively suppressed from entering the heat insulating protective member attached to the skid pipe 1. It is preferable that the blanket 15 to which the inorganic binder is attached and that is in an undried state be the inorganic fiber needled blanket having a thickness of about 10 to 30 mm and being impregnated with the inorganic binder at a ratio of 2 to 50 parts by mass relative to 100 parts by mass of the inorganic fiber.

According to an embodiment of the in-furnace member of the present invention, heat insulating protective members in which the pin is inserted into the end surface are used and assembled to form an in-furnace member with the pin inserted into holes of both adjacent heat insulating protective members, end portions of which are contacted each other.

According to an embodiment of the in-furnace member of the present invention, the in-furnace member includes a sheet-like inorganic fiber attached to the in-furnace member so as to cover the heat insulating protective member according to the present invention. That is, an inorganic fiber layer may be further formed outside the outer circumferential surface of the inorganic fiber formed body constituting the heat insulating protective member according to the present invention so as to form an outermost layer. In such an instance, the bulk density of the outermost layer may be equal to the bulk density (Da) of the outer circumferential portion or be lower than or higher than the bulk density (Da) of the outer circumferential portion. In this regard, from the viewpoint of exerting an effect of improving the physical strength with respect to contact, it is preferable that the bulk density of the outermost layer when the outermost layer is further formed be higher than the bulk density (Da) of the outer circumferential portion.

### [Reheating furnace]

The reheating furnace according to the present invention includes an in-furnace member to which the heat insulating protective member according to the present invention is installed.

### EXAMPLES

In the example and the comparative example described below, to evaluate the outer-circumferential-surface-side stiffness of the heat insulating protective member in consideration of the physical strength for the in-furnace member, a falling ball test as described below was performed.

### [Definition of falling ball test]

A sample was made into a size of 100 mm × 50 mm × thickness of 30 mm, a steel ball having a mass of 550 g was made to fall from a height of 60 cm onto the sample central portion, and a difference in the thickness of the sample central portion between before and after the test was taken as a dent depth.

### [Example 1]

A needled blanket (trade name: Mitsubishi Chemical MAFTEC MLS-2, thickness of 7.5 mm, bulk density of 155 kg/m³) produced by accumulating polycrystalline alumina/silica-based fibers that had an average fiber diameter of 5.5 µm, that did not substantially contain fibers having a fiber diameter of 3 µm or less, and that contain 72% by mass of alumina and 28% by mass of silica and performing needling was made into width of 40 mm × length of 1,150 mm so as to produce a needled blanket 30.

As illustrated in Figs. 1 to 8, a glass cloth (CHUKOH FLO (registered trademark) G-type Fabric produced by Chukoh Chemical Industries, Ltd.) having a thickness of 0.5 mm and serving as a release sheet was wound one turn around the inner mold. Thereafter, needled blankets 30 were stacked in steps between the inner mold 20 and the outer mold 40.

Subsequently, an integrated material 80 was produced by using a jig 60 to press and compress in the stacking direction. The resulting integrated material 80 was dipped in an inorganic-binder-containing liquid L composed of alumina sol having a solids concentration of 9.6% by weight (Almina Sol 200 Nissan Chemical Industries, Ltd.) for 24 hours so as to impregnate the entire needled blanket with 17 Kg of the liquid L.

Thereafter, the integrated material 80 was taken up from the liquid L and placed in a case 70, and the liquid removal was performed for 15 minutes at a negative pressure of -13.5 to -8.5 kPa. Subsequently, suction was continued, and warm air at 100°C to 150°C was introduced into a box for 4 hours so as to perform drying. After drying, the integrated material 80 was removed from the case 70, and the molds were removed. Thereafter, the temperature was increased to 1,000°C at a temperature increase rate of 3°C/min, the temperature was maintained for 3 hours, and firing was performed so as to prepare example 1.

### [Bulk density ratio]

The resulting inorganic fiber formed and fired body of example 1 was cut into three parts, an outer circumferential surface (a), a midpoint portion (b), and an inner circumferential surface (c), of equal size (12 × 13 × 45 mm), and the weight of each sample was measured and divided by the volume so as to determine the bulk density (kg/m³). Three samples of each part were produced, and an average value thereof was determined. Of the resulting bulk densities, the bulk density of the inner circumferential surface that was the lowest bulk density was taken as the reference, and bulk density ratio was calculated. The results are described in Table 1.

### [Inorganic binder content (amount of attachment) distribution]

In the same manner, the amount of the inorganic binder contained, in terms of Al₂O₃, at each of the outer circumferential surface (a), the midpoint portion (b), and the inner circumferential surface (c) was determined. Three samples of each part were produced, and an average value of the respective amount of attachment of three samples was determined. Initially, the amount of the inorganic binder attached of the outer circumferential surface (Ba), the amount of the inorganic binder attached of the midpoint portion (Bb), and the amount of the inorganic binder attached of the inner circumferential surface (Bc) were measured. Subsequently, the amount of the inorganic binder attached of the inner circumferential surface (Bc) that was the lowest weight was taken as the reference value, the amount of the inorganic binder attached of the inner circumferential surface (Bc) was subtracted from each of the amount of the inorganic binder attached of the outer circumferential surface (Ba) and the amount of the inorganic binder attached of the midpoint portion (Bb) so as to calculate the difference in the amount of the inorganic binder attached. The results are described in Table 1.

### [Comparative example 1]

Regarding a hard ceramic fiber heat insulating material that was subjected to vacuum forming and that was equivalent to the ring-shaped heat insulating material according to JP 2004-43918 A, the measurement akin to that in example 1 was performed. The results are described in Table 1.

**[Table 1]**

| Heat insulating protective member | | Example 1 | | | Comparative example 1 | | |
|---|---|---|---|---|---|---|---|
| | | Outer circumferential surface | Midpoint portion | Inner circumferential surface | Outer circumferential surface | Midpoint portion | Inner circumferential surface |
| Configuration | Bulk density ratio | 1.3 | 1.2 | 1.0 | 1.0 | 1.0 | 1.0 |
| | Difference in amount of inorganic binder particles attached (g) | 0.4 | 0.3 | (0) | 0 | 0 | (0) |
| Evaluation | Falling ball test | 5 mm | | | 14 mm | | |

### [Consideration]

It is clear that the inorganic fiber formed and fired body of example 1 serving as the heat insulating protective member according to the present invention has a very shallow steel ball damage depth and therefore has excellent physical strength. That is, it is conjectured that since the bulk density increased toward the outer circumferential surface, the physical strength on the assumption of damage due to contact was considerably improved. In addition, as a result of distribution of the amount of inorganic binder particles attached which was calculated from the measurement value of the weight, it was found that the amount of the inorganic binder particles attached of example 1 had a tendency to increase from the inside toward the outside.

As described above, the inorganic fiber formed and fired body of example 1 in which the inorganic binder is selectively attached to the outer circumferential surface features many inorganic binder particles being attached to the outer-circumferential-surface side serving as the heat insulating protective member required to have strength and relatively reduced number of inorganic binder particles being attached to the inner-circumferential-surface side required to have adhesiveness to the in-furnace member (cushioning properties) during installing. Therefore, it is conjectured that damage due to contact is reduced and that protection and fixing of the in-furnace member is further enhanced.

In addition, it is conjectured that since the inorganic fiber formed and fired body of example 1 has a configuration in which inorganic fiber blankets are stacked and compressed in the direction substantially perpendicular to the direction of contact with the falling ball, the impact due to the falling ball can be dispersed to stacking interfaces and the impact due to the falling ball can be relieved to between the layers so as to considerably improve the physical strength.

In this regard, according to visual observation of the inorganic fiber formed and fired body of example 1 after the falling ball test, it was ascertained that there was a small crack between layers in the stacking direction of the inorganic fiber blankets. It is considered that when this is installed as a heat insulating protective member of an in-furnace member, since compression and holding are performed in the vertical direction of stacking, the physical strength is further improved, and cracking does not occur.

On the other hand, regarding the inorganic fiber formed and fired body of comparative example 1, many large cracks occurred in various directions so as to cause considerable pulverizing. It is considered that regarding the inorganic fiber formed and fired body of comparative example 1, since an inorganic fiber bulk (just gathered fibers) was used as the raw material, fibers were not entangled with each other, and cracking and pulverizing readily occurred.

The present invention has been described in detail with reference to specific aspects. However, it will be understood by a person skilled in the art that various modifications can be made without departing from the scope of the appended claims.

### Reference Signs List

- 10: heat insulating protective member
- 13: filler
- 20: inner mold
- 30: needled blanket
- 40, 50: outer mold
- 80: integrated material

## Claims

1. A heat insulating protective member (10) comprising
an inorganic fiber formed body having a hollow cylindrical shape or a split hollow cylindrical shape,
wherein the inorganic fiber formed body has an inner circumferential surface (c) facing a hollow and an outer circumferential surface (a) constituting an outer circumference,
the bulk density of the inorganic fiber formed body increases toward the outer circumferential surface (a), wherein the bulk density is determined by measuring the weight of a sample and dividing it by the volume,
the inorganic fiber formed body contains an inorganic binder, and the inorganic binder content increases toward the outer circumferential surface (a) from the inner circumferential surface, and
the inorganic fiber formed body is an inorganic fiber formed and fired body including inorganic binder particles that bond the inorganic fibers to each other, and the inorganic binder particle content increases toward the outer circumferential surface (a).

2. The heat insulating protective member according to Claim 1, wherein
the heat insulating protective member has a split hollow cylindrical shape, and
the split surface is an obliquely cut surface (10c) that obliquely crosses the diameter direction of the hollow cylindrical formed body.

3. The heat insulating protective member according to any one of Claims 1 to 2, wherein
the end surface of the heat insulating protective member has a hole (11, 23, 43, 53) for inserting a pin.

4. An in-furnace member provided with the heat insulating protective member (10) according to any one of Claims 1 to 3 on an outer surface of the in-furnace member.

5. The in-furnace member according to Claim 4, wherein
the heat insulating protective member is the heat insulating protective member according to Claim 3, and a pin is inserted into the holes (11, 23, 43, 53) of both the adjacent heat insulating protective members with the respective end surfaces being contacted one another.

6. The in-furnace member according to Claim 4 or Claim 5 comprising
a sheet-like inorganic fiber covering the heat insulating protective member attached to the in-furnace member.

7. A reheating furnace comprising the in-furnace member according to any one of Claims 4 to 6.

8. The reheating furnace according to Claim 7, wherein the in-furnace member is a skid post or a skid beam.

9. A method for installing a heat insulating protective member comprising
a step of installing the heat insulating protective member (10) according to any one of Claims 1 to 3 to an outer surface of an in-furnace member.

10. The method for installing a heat insulating protective member according to Claim 9, wherein
the heat insulating protective member is the heat insulating protective member according to Claim 3, and a pin is inserted into the holes of both the adjacent heat insulating protective members with the respective end surfaces being contacted one another.

11. The method for installing a heat insulating protective member according to Claim 9 or Claim 10, comprising
the step of filling a gap between the end surface of the heat insulating protective member (10) and the in-furnace member with an inorganic fiber filler, after the heat insulating protective member is installed.

12. The method for installing a heat insulating protective member according to any one of Claims 9 to 11, comprising
a step of covering the heat insulating protective member with a sheet-like inorganic fiber, after the heat insulating protective member is installed.

## Patentansprüche

1. Wärmeisolierendes Schutzelement (10) umfassend
einen aus anorganischen Fasern gebildeten Körper mit einer hohlen zylindrischen Form oder einer geteilten hohlen zylindrischen Form,
wobei der aus anorganischen Fasern gebildete Körper eine innere Umfangsfläche (c), die einem Hohlraum zugewandt ist, und eine äußere Umfangsfläche (a) aufweist, die einen Außenumfang bildet,
wobei die Schüttdichte des aus anorganischen Fasern gebildeten Körpers zur äußeren Umfangsfläche (a) hin zunimmt, wobei die Schüttdichte durch Messung des Gewichts einer Probe und dessen Division durch das Volumen bestimmt wird,
wobei der aus anorganischen Fasern gebildete Körper ein anorganisches Bindemittel enthält und der Gehalt an anorganischem Bindemittel von der inneren Umfangsfläche zu der äußeren Umfangsfläche (a) hin zunimmt, und
wobei der aus anorganischen Fasern gebildete Körper ein aus anorganischen Fasern gebildeter und gebrannter Körper ist einschließlich anorganischer Bindemittelteilchen, die die anorganischen Fasern miteinander verbinden, und der Gehalt an anorganischen Bindemittelteilchen in Richtung der äußeren Umfangsfläche (a) zunimmt.

2. Wärmeisolierendes Schutzelement nach Anspruch 1, wobei
das wärmeisolierende Schutzelement eine geteilte hohlzylindrische Form aufweist, und
die geteilte Fläche eine schräg geschnittene Fläche (10c) ist, die die Durchmesserrichtung des hohlzylindrischen Formkörpers schräg kreuzt.

3. Wärmeisolierendes Schutzelement nach einem der Ansprüche 1 bis 2, wobei
die Endfläche des wärmeisolierenden Schutzelementes ein Loch (11, 23, 43, 53) zum Einsetzen eines Stifts aufweist.

4. Ofenelement, das mit dem wärmeisolierenden Schutzelement (10) nach einem der Ansprüche 1 bis 3 an einer Außenfläche des Ofenelements versehen ist.

5. Ofenelement nach Anspruch 4, wobei
das wärmeisolierende Schutzelement das wärmeisolierende Schutzelement nach Anspruch 3 ist, und ein Stift in die Löcher (11, 23, 43, 53) der beiden benachbarten wärmeisolierenden Schutzelemente eingeführt wird, wobei die jeweiligen Endflächen aneinander anliegen.

6. Ofenelement nach Anspruch 4 oder Anspruch 5, umfassend
eine flächige anorganische Faser, die das wärmeisolierende Schutzelement bedeckt, das an dem Ofenelement befestigt ist.

7. Wiedererwärmungsofen, umfassend das Ofenelement nach einem der Ansprüche 4 bis 6.

8. Wiedererwärmungsofen nach Anspruch 7, wobei es sich bei dem Ofenelement um einen Gleitpfosten oder einen Gleitbalken handelt.

9. Verfahren zum Anbringen eines wärmeisolierenden Schutzelements, umfassend
einen Schritt des Anbringens des wärmeisolierenden Schutzelements (10) nach einem der Ansprüche 1 bis 3 an einer Außenfläche eines Ofenelements.

10. Verfahren zum Anbringen eines wärmeisolierenden Schutzelements nach Anspruch 9, wobei
das wärmeisolierende Schutzelement das wärmeisolierende Schutzelement nach Anspruch 3 ist, und ein Stift in die Löcher der beiden benachbarten wärmeisolierenden Schutzelemente eingeführt wird, wobei die jeweiligen Endflächen miteinander in Kontakt stehen.

11. Verfahren zum Anbringen eines wärmeisolierenden Schutzelements nach Anspruch 9 oder Anspruch 10, umfassend
den Schritt des Füllens eines Spalts zwischen der Endfläche des wärmeisolierenden Schutzelements (10) und dem Ofenelement mit einem anorganischen Faserfüllstoff, nachdem das wärmeisolierende Schutzelement installiert wurde.

12. Verfahren zum Anbringen eines wärmeisolierenden Schutzelements nach einem der Ansprüche 9 bis 11, umfassend
einen Schritt des Abdeckens des wärmeisolierenden Schutzelements mit einer flächigen anorganischen Faser, nachdem das wärmeisolierende Schutzelement installiert wurde.

## Revendications

1. Élément de protection d'isolation thermique (10) comprenant
un corps formé de fibres inorganiques présentant une forme cylindrique creuse ou une forme cylindrique creuse fendue,
dans lequel le corps formé de fibres inorganiques présente une surface circonférentielle intérieure (c) en face d'un creux et une surface circonférentielle extérieure (a) constituant une circonférence extérieure,
la masse volumique du corps formé de fibres inorganiques augmente vers la surface circonférentielle extérieure (a), dans lequel la masse volumique est déterminée en mesurant le poids d'un échantillon et en le divisant par le volume,
le corps formé de fibres inorganiques contient un liant inorganique, et la teneur en liant inorganique augmente vers la surface circonférentielle extérieure (a) en partant de la surface circonférentielle intérieure, et
le corps formé de fibres inorganiques est un corps formé de fibres inorganiques et chauffé incluant des particules de liant inorganique qui lient les fibres inorganiques les unes aux autres, et la teneur en particules de liant inorganique augmente vers la surface circonférentielle extérieure (a).

2. Élément de protection d'isolation thermique selon la revendication 1, dans lequel
l'élément de protection d'isolation thermique présente une forme cylindrique creuse fendue, et
la surface fendue est une surface découpée de manière oblique (10c) qui traverse obliquement la direction diamétrale du corps de forme cylindrique creuse.

3. Élément de protection d'isolation thermique selon l'une quelconque des revendications 1 à 2, dans lequel
la surface d'extrémité de l'élément de protection d'isolation thermique présente un trou (11, 23, 43, 53) pour insérer une broche.

4. Élément dans un four doté de l'élément de protection d'isolation thermique (10) selon l'une quelconque des revendications 1 à 3 sur une surface extérieure de l'élément dans un four.

5. Élément dans un four selon la revendication 4, dans lequel
l'élément de protection d'isolation thermique est l'élément de protection d'isolation thermique selon la revendication 3, et une broche est insérée dans les trous (11, 23, 43, 53) des deux éléments de protection d'isolation thermique adjacents avec les surfaces d'extrémités respectives qui sont en contact les unes avec les autres.

6. Élément dans un four selon la revendication 4 ou la revendication 5 comprenant
une fibre inorganique en forme de feuille couvrant l'élément de protection d'isolation thermique attaché à l'élément dans un four.

7. Four de réchauffage comprenant l'élément dans un four selon l'une quelconque des revendications 4 à 6.

8. Four de réchauffage selon la revendication 7, dans lequel l'élément dans un four est une tige de glissement ou une poutre de glissement.

9. Procédé destiné à installer un élément de protection d'isolation thermique comprenant
une étape destinée à installer l'élément de protection d'isolation thermique (10) selon l'une quelconque des revendications 1 à 3 sur une surface extérieure d'un élément dans un four.

10. Procédé d'installation d'un élément de protection d'isolation thermique selon la revendication 9, dans lequel
l'élément de protection d'isolation thermique est l'élément de protection d'isolation thermique selon la revendication 3, et une broche est insérée dans les trous des deux éléments de protection d'isolation thermique adjacents avec les surfaces d'extrémités respectives qui sont en contact les unes avec les autres.

11. Procédé d'installation d'un élément de protection d'isolation thermique selon la revendication 9 ou la revendication 10, comprenant
l'étape destinée à remplir un espace entre la surface d'extrémité de l'élément de protection d'isolation thermique (10) et l'élément dans un four avec un moyen de remplissage en fibres inorganiques, une fois que l'élément de protection d'isolation thermique est installé.

12. Procédé d'installation d'un élément de protection d'isolation thermique selon l'une quelconque des revendications 9 à 11, comprenant
une étape destinée à couvrir l'élément de protection d'isolation thermique avec une fibre inorganique de type feuille, après que l'élément de protection d'isolation thermique soit installé.
